# FASCICULE DE BREVET EUROPEEN

(11) **EP 3 809 303 B1**
(45) Date de publication et mention de la délivrance du brevet: **24.05.2023**
(21) Numéro de dépôt: 20200794.4
(22) Date de dépôt: 08.10.2020
(51) Int. Cl.: G06F 21/75, G06F 21/70, G06F 21/71, G06F 11/16

(54) **PROCÉDÉ D'AUTHENTIFICATION D'UN CIRCUIT SUR PUCE ET SYSTÈME SUR PUCE ASSOCIÉ**
VERFAHREN ZUR AUTHENTIFIZIERUNG EINES ON-CHIP-KREISES UND EINES ZUGEHÖRIGEN SYSTEM-ON-CHIP
METHOD FOR AUTHENTICATING AN ON-CHIP CIRCUIT AND ASSOCIATED SYSTEM-ON-CHIP

(30) Priorité: 18.10.2019 FR 1911680
(43) Date de publication de la demande: 21.04.2021
(73) Titulaire: STMicroelectronics (Rousset) SAS, 13790 Rousset (FR)
(72) Inventeur: GIAUME, Olivier, 83170 BRIGNOLES (FR)
(74) Mandataire: Casalonga

(56) Documents cités:
- US-A1- 2008 244 305
- US-A1- 2014 115 401
- US-A1- 2019 171 536

## Description

Des modes de mise en oeuvre et de réalisation de l'invention concernent les systèmes sur puce et plus particulièrement l'authentification de puces électroniques formant des systèmes sur puce connus de l'homme du métier sous le terme anglo-saxon « System on chip » (SoC).

Afin d'empêcher une attaque par injection de fautes connue par l'homme du métier sous la dénomination anglo-saxonne « Fault injection », un système sur puce peut comprendre deux unités de traitement (CPU), l'une fonctionnant en tant que CPU maître et l'autre en tant que CPU "vérificateur". Les deux unités de traitement exécutent le même code de programme et reçoivent les mêmes données d'entrée.

Les sorties des deux unités centrales sont comparées afin d'identifier des erreurs du CPU maître ou esclave en cours de fonctionnement.

On pourra se référer au document US 2008/0244305 qui divulgue une architecture comprenant un premier CPU, un deuxième CPU, un premier étage de retard, un deuxième étage de retard, et une unité de comparaison. Les CPU sont configurés pour exécuter les mêmes instructions d'un programme applicatif sur un signal. Le premier CPU reçoit un signal initial en entrée, le traite et fournit au premier étage de retard le signal initial traité, puis le signal initial traité est délivré à l'unité de comparaison. En contraste, le deuxième CPU reçoit le signal initial retardé par le deuxième étage de retard en entrée, le traite et le fournit à l'unité de comparaison qui compare les deux signaux.

Les premier et deuxième étages de retard sont configurés de sorte que l'unité de comparaison compare les données générées par l'exécution, à des instants différents, des même instructions par les premier et deuxième CPU, les étages de retard compliquant une attaque par injection de fautes.

Le document US 2019/0171536 A1 aussi divulgue une architecture comprenant un premier CPU, un deuxième CPU, un premier étage de retard, un deuxième étage de retard, et une unité de comparaison. Le document US 2019/0171536 A1 divulgue que les circuits de retard peuvent être configures pour retarder un signal respectif d'un retard fixe prédéterminé, le retard fixe étant égal à une valeur de 0 à N, ou 0 correspond à aucun retard et N correspond a N nombre de cycles d'horloge.

Cependant, comme les retards induits par les premier et deuxième étages de retard sont fixes, il est aisé de déterminer la valeur des retards en observant les entrées et sorties des premier et deuxième étages de retard.

Il existe un besoin d'améliorer la sécurité du circuit intégré, notamment contre les attaques par injection de fautes.

Selon des modes de mises en oeuvre et de réalisation, il est avantageusement proposé d'exécuter une même ligne d'instructions d'un programme applicatif par des unités de traitement différentes d'une puce, de retarder d'une valeur variable la transmission d'une première ligne traitée par une première unité de traitement, et de retarder de ladite valeur variable la transmission de la ligne d'instruction à une deuxième unité de traitement.

Selon un aspect, il est proposé un procédé d'authentification de système sur puce comprenant :
- une réception d'une ligne de données initiale, un premier traitement de la ligne de données initiale par une première unité de traitement de façon à délivrer une première ligne de données traitée,
- une application d'un premier retard à la première ligne de données traitée pour délivrer une première ligne de données traitée retardée,
- une application d'un deuxième retard à la ligne de données initiale pour délivrer une ligne de données initiale retardée,
- un deuxième traitement de la ligne de données initiale retardée par une deuxième unité de traitement pour délivrer une deuxième ligne de données traitée retardée,
- une comparaison des contenus des première et deuxième lignes traitées retardées et
- une délivrance d'un signal de non authentification si lesdits contenus ne sont pas identiques, les premier et deuxième retards étant égaux à une valeur variable.

Comme les premier et deuxième retards sont égaux à une valeur variable, un attaquant pourra difficilement identifier, en observant les entrées et sorties des unités de traitement, la valeur du retard.

Selon l'invention, la valeur variable est déterminée de manière aléatoire.

La valeur des retards change de manière aléatoire de manière à empêcher qu'un attaquant identifie une séquence prédéterminée de valeur de retard.

Selon autre un mode de mise en oeuvre, les première et deuxième lignes de données traitées retardées comprennent respectivement une première adresse et une deuxième adresse, un premier jeux de droits et un deuxième jeux de droits et un premier ensembles de données et un deuxième ensembles de données, le procédé comprenant :
- une première comparaison des première et deuxième adresses,
- une deuxième comparaison des premier et deuxième jeux de droits, et
- une troisième comparaison des premier et deuxième ensembles de données.

Selon encore un autre mode de mise en oeuvre, le procédé comprend la délivrance du signal de non authentification lorsque au moins une des comparaisons des première et deuxième adresses, des premier et deuxième jeux de droits ou des premier et deuxième ensembles de données ne sont pas identiques.

Selon encore un autre mode de mise en oeuvre, le procédé comprend comprenant une augmentation de la valeur variable des premier et deuxième retards en activant au moins une cellule de retard configurée pour retarder la transmission d'un signal la traversant, la comparaison des contenus des première et deuxième lignes traitées retardées étant inactive pendant la durée d'activation de la cellule de retard.

Selon encore un autre mode de mise en oeuvre, le procédé comprend une diminution de la valeur variable des premier et deuxième retards en désactivant au moins une cellule de retard configurée pour retarder la transmission d'un signal la traversant lorsque la première unité de traitement reçoit une commande d'attente.

L'instant de la diminution de la valeur du retard est déterminé.

Selon encore un autre mode de mise en oeuvre, le procédé comprend une diminution de la valeur variable des premier et deuxième retards en désactivant au moins une cellule de retard entre l'émission d'une requête d'une ligne d'instructions par la première unité de traitement et la réception de ladite ligne par la première unité de traitement, la cellule de retard étant configurée pour retarder la transmission d'un signal les traversant.

La diminution de la valeur du retard est effectuée pendant un temps de latence de manière à ne pas ralentir l'exécution du programme applicatif par la première unité de traitement.

Selon encore un autre mode de mise en oeuvre, le procédé comprend une diminution de la valeur variable des premier et deuxième retards en désactivant au moins une cellule de retard entre l'exécution d'une ligne d'instructions contenant au moins une instruction de branchement et l'exécution de la ligne d'instructions désignée par l'instruction de branchement, la cellule de retard étant configurée pour retarder la transmission d'un signal les traversant.

La diminution de la valeur du retard est effectuée pendant un temps de latence de manière à ne pas ralentir l'exécution du programme applicatif par la première unité de traitement.

Selon un autre aspect, il est proposé un système sur puce comprenant :
- une entrée pour recevoir une ligne de données initiale, une première unité de traitement couplée à ladite entrée et configurée pour traiter la ligne de données initiale et délivrer une première ligne de données traitée,
- des premiers moyens de retard couplés à la sortie de la première unité de traitement et configurés pour délivrer une première ligne de données traitée retardée d'un premier retard,
- des deuxième moyens de retard couplées à l'entrée et configurés pour délivrer la ligne de données initiale retardée d'un deuxième retard,
- une deuxième unité de traitement couplée à la sortie des deuxièmes moyens de retard et configurée pour traiter la ligne de données initiale retardée et délivrer une deuxième ligne de données traitée retardée, et
- des moyens de comparaison configurés pour comparer les contenus des première et deuxième lignes traitées retardées et délivrer un signal de non authentification si lesdits contenus ne sont pas identiques, les premier et deuxième retards étant égaux à une valeur variable déterminée de manière aléatoire.

Selon un mode de réalisation, les première et deuxième lignes de données traitées retardées comprennent respectivement une première adresse et une deuxième adresse, un premier jeux de droits et un deuxième jeux de droits et un premier ensemble de données et un deuxième ensemble de données, les moyens de comparaison étant configurés pour comparer entre eux les première et deuxième adresses, les premier et un deuxième jeux de droits et les premier et deuxième ensembles de données.

Selon un autre mode de réalisation, les moyens de comparaison sont configurés pour émettre le signal de non authentification lorsque au moins une des comparaisons des première et deuxième adresses, des premier et deuxième jeux de droits ou des premier et deuxième ensembles de données ne sont pas identiques.

Selon encore un autre mode de réalisation, les premiers et deuxièmes moyens de retard comprennent chacun au moins une cellule de retard configurée pour retarder la transmission d'un signal la traversant, le dispositif comprenant en outre des moyens de commande configurés pour activer ou désactiver la cellule de retard des premiers et deuxièmes moyens de retard de manière à respectivement augmenter ou diminuer la valeur variable.

Selon encore un autre mode de réalisation, les moyens de commande étant en outre configurés pour désactiver les moyens de comparaison pendant la durée d'activation de la cellule de retard des premiers et deuxièmes moyens de retard.

Selon encore un autre mode de réalisation, les moyens de commande étant en outre configurés pour simultanément transmettre à la première unité de traitement une commande d'attente lors de la désactivation de la cellule de retard des premiers et deuxièmes moyens de retard.

Selon encore un autre mode de réalisation, les moyens de commande étant en outre configurés pour désactiver la cellule de retard des premiers et deuxièmes moyens de retard entre l'émission d'une requête d'une ligne d'instructions par la première unité de traitement et la réception de ladite ligne par la première unité de traitement.

Selon encore un autre mode de réalisation, les moyens de commande étant en outre configurés pour désactiver la cellule de retard des premiers et deuxièmes moyens de retard entre l'exécution d'une ligne d'instructions contenant au moins une instruction de branchement et l'exécution de la ligne d'instructions désignée par l'instruction de branchement.

Selon encore un autre mode de réalisation, les moyens de commande comprennent un générateur de nombre aléatoire relié à un gestionnaire de retard configuré pour piloter les premiers et deuxièmes moyens de retard en fonction du générateur de nombre aléatoire.

Selon encore un autre aspect, il est proposé un appareil comprenant un système sur puce tel que défini ci-avant.

Selon encore un autre aspect, il est proposé un dispositif d'authentification d'un accessoire électronique comprenant un appareil tel que défini ci-avant, et un accessoire électronique coopérant avec l'appareil et comportant un système sur puce tel que défini ci-avant, l'appareil étant configuré pour délivrer la ligne de données initiale à l'accessoire, et l'accessoire étant configuré pour délivrer à l'appareil un signal de contrôle indicatif du résultat de la comparaison effectuée par l'accessoire, l'appareil étant configuré pour comparer le signal contrôle à un signal de résultat indicatif du résultat de la comparaison effectuée par l'appareil.

D'autres avantages et caractéristiques de l'invention apparaîtront à l'examen de la description détaillée de modes de réalisation, nullement limitatifs, et des dessins annexés sur lesquels :
[Fig 1]
[Fig 2]
[Fig 3]
[Fig 4]
[Fig 5]
[Fig 6]
[Fig 7]
[Fig 8]
[Fig 9]
[Fig 10]
   illustrent des modes de réalisation et de mise en oeuvre de l'invention.

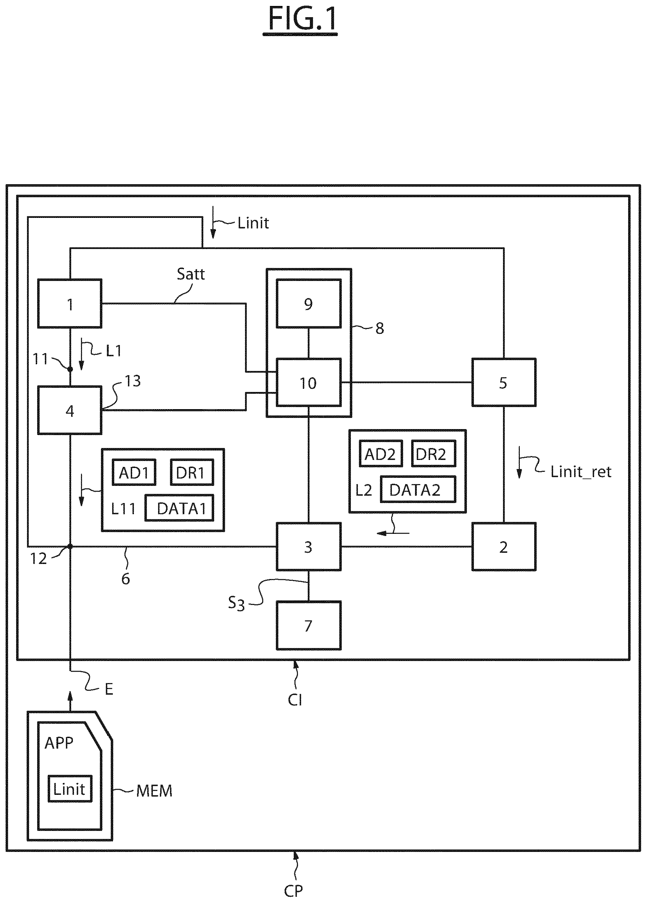

On se réfère à la figure 1 qui représente un premier mode de réalisation d'un système sur puce CI incorporé dans un appareil électronique CP.

Le système sur puce CI comprend une première unité de traitement 1, une deuxième unité de traitement 2, des moyens de comparaison 3, des premiers moyens de retard 4, des deuxièmes moyens de retard 5, un bus 6, un gestionnaire d'erreur 7 et des moyens de commande 8 comprenant un générateur de nombre aléatoire 9 et un gestionnaire de retard 10.

Le système sur puce CI comprend une entrée E pour recevoir une ligne de données initiale Linit, la première unité de traitement 1 couplée à ladite entrée E et configurée pour traiter la ligne initiale Linit et délivrer une première ligne de données traitée L1.

Le système CI comprend en outre les premiers moyens de retard 4 couplés à la sortie de la première unité de traitement 1 et configurés pour délivrer la première ligne de données traitée L1 retardée L11 d'un premier retard, et les deuxièmes moyens de retard 5 couplées à l'entrée E et configurés pour délivrer la ligne de données initiale Linit retardée Linit_ret d'un deuxième retard.

Le système CI comporte la deuxième unité de traitement 2 couplée à la sortie des deuxièmes moyens de retard 5 et configurée pour traiter la ligne de données initiale retardée Linit_ret et délivrer une deuxième ligne de données traitée L2 retardée.

Le système CI comprend en outre des moyens de comparaison 3 configurés pour comparer les contenus des première et deuxième lignes de données traitées retardées L11 et L2 et délivrer un signal S3 de non authentification si lesdits contenus ne sont pas identiques, les premier et deuxième retards étant égaux à une valeur variable T_ret.

La valeur variable T_ret est déterminée de manière aléatoire.

La ligne de données initiale Linit est par exemple une ligne d'instructions d'un programme applicatif APP stocké dans une mémoire non volatile du type mémoire flash MEM localisée à l'extérieur du circuit CI et relié à l'entrée E.

L'entrée E est en outre reliée au bus 6 du système CI, le bus 6 étant relié aux unités de traitement 1 et 2, aux premiers et deuxièmes moyens de retard 4, 5 et aux moyens de comparaison 3.

Bien entendu, en variante, la mémoire MEM peut être située sur le système CI.

Comme la valeur variable T_ret est déterminée de manière aléatoire, un attaquant ne pourra pas identifier en observant les entrées et sorties des unités de traitement 1 et 2 la valeur des premier et deuxième retards.

Les premiers et deuxièmes moyens de retard 4 et 5 sont d'architecture identique et seront détaillés par la suite.

Les première et deuxième lignes de données traitées retardées L11 et L2 comprennent respectivement une première et une deuxième adresses AD1 et AD2, un premier et un deuxième jeux de droits DR1 et DR2, et un premier et un deuxième ensembles de données DATA1 et DATA2.

Bien entendu, les contenus des première et deuxième lignes de données traitées retardées L11 et L2 peuvent être organisés différemment, par exemple ne pas contenir de jeux de droits DR1 et DR2.

Les moyens de comparaison 3 sont configurés pour comparer les première et deuxième adresses AD1 et AD2, les premier et deuxième jeux de droits DR1 et DR2, et les premier et deuxième ensembles de données DATA1 et DATA2.

Chaque jeu de droits DR1, DR2 comprend par exemple un droit en écriture d'une ou plusieurs données dans une mémoire, un droit en lecture d'une ou plusieurs données ou instructions dans une mémoire ou un droit en exécution d'un programme applicatif. Bien entendu, chaque jeu de droits peut comprend l'un ou plusieurs des droits cités précédemment.

Les moyens de comparaison 3 sont configurés pour émettre le signal S3 de non authentification lorsque au moins les première et deuxième adresses AD1 et AD2, les premier et deuxième jeux de droits DR1 et DR2 ou les premier et deuxième ensembles de données DATA1 et DATA2 ne sont pas identiques.

Les moyens de comparaison transmettent par exemple le signal S3 de non authentification au gestionnaire d'erreur 7 du système CI qui peut par exemple redémarrer ou bloquer le système CI, réinitialiser les unités de traitement 1 et 2 ou stocker un code de non authentification dans une mémoire pour être utilisé ultérieurement.

Le système CI permet par exemple d'authentifier la première ou la deuxième unité de traitement 2 selon le résultat des comparaisons.

Si le signal S3 est émis, la première ou la deuxième unité de traitement 2 n'est pas identique à l'autre unité de traitement, par conséquent l'une des unités de traitement a par exemple fait l'objet d'une attaque par injection de fautes.

Les moyens de commande 8 comprennent le générateur de nombre aléatoire 9 relié au gestionnaire de retard 10 configuré pour piloter les premiers et deuxièmes moyens de retard 4, 5 en fonction du générateur de nombre aléatoire.

Les moyens de commande 8 sont réalisés par exemple à partir de circuits logiques comportant des portes logiques.

Les premiers moyens de retard 4 comprennent une entrée 11 reliée à une sortie de l'unité de traitement 1 délivrant la ligne L1, une sortie 12 reliée aux moyens de comparaison 3 et au bus 6, et une entrée de commande 13 reliée au et pilotée par le gestionnaire de retard 10.

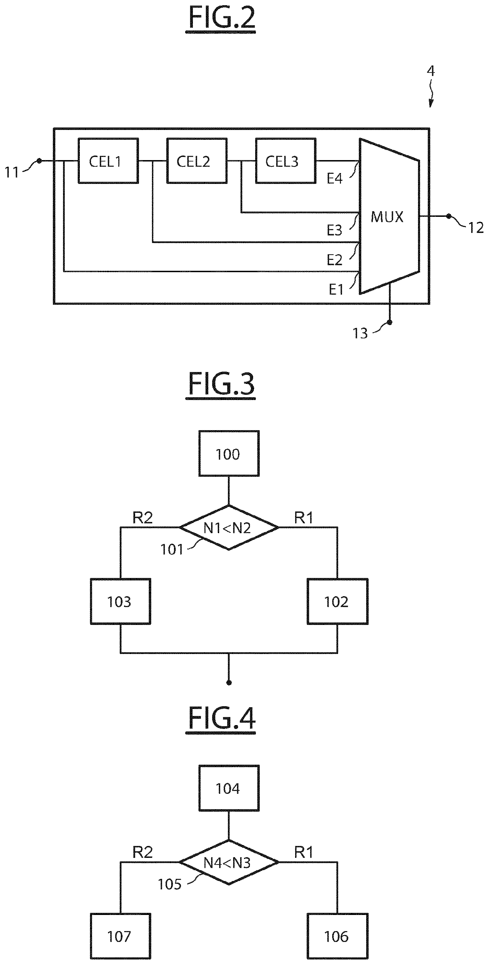

Comme les premiers et deuxièmes moyens de retard 4 et 5 sont d'architecture identique, seul l'exemple des premiers moyens de retard 4 est illustré à la figure 2, mais les deuxièmes moyens de retard 5 comprennent également une entrée recevant le signal Linit, une sortie reliée à une entrée de l'unité de traitement 2 délivrant le signal Linit_ret, et une entrée de commande reliée au et pilotée par le gestionnaire de retard.

Les moyens de retard 4 comprennent en outre trois cellules de retard CEL1, CEL2 et CEL3 identiques et un multiplexeur MUX commandé par les moyens de commande 8.

Chaque cellule de retard CEL1, CEL2 et CEL3 est réalisée par exemple à partir d'un élément de mémoire, par exemple une bascule « flip flop ».

L'entrée 11 est reliée à une première entrée E1 du multiplexeur MUX et à une entrée de la première cellule CEL1, une sortie de la cellule CEL1 étant reliée à une deuxième entrée E2 du multiplexeur MUX.

La deuxième cellule CEL2 comprend une entrée reliée à la sortie de la première cellule CEL1, et une sortie reliée à une troisième entrée E3 du multiplexeur MUX et à une entrée de la troisième cellule CEL3.

La troisième cellule CEL3 comprend une entrée reliée à la sortie de la deuxième cellule CEL2, et une sortie reliée à une quatrième entrée E4 du multiplexeur MUX, une sortie du multiplexeur étant reliée à la sortie 12.

Chaque cellule de retard CEL1, CEL2 et CEL3 est configurée pour retarder la transmission d'un signal la traversant, par exemple d'un cycle d'une horloge cadençant le bus 6.

Le gestionnaire de retard 10 est configuré pour activer ou désactiver les cellules de retard CEL1, CEL2 et CEL3 de manière à respectivement augmenter ou diminuer la valeur variable T_ret.

Selon l'entrée du multiplexeur MUX activée par les moyens de commande 8, le signal reçu à l'entrée 11 est retardée de un, deux ou trois cycles d'horloge (entrée E2, E3 ou E4 activée), ou n'est pas retardé (entrée E1 activée).

Les deuxièmes moyens de retard 5 sont commandés simultanément par les moyens de commande 8 de sorte que la même entrée du multiplexeur MUX soit activée afin la transmission de la ligne Linit soit retardée de la valeur variable T_ret.

Bien entendu, les moyens de retard 4 peuvent comprendre plus de trois cellules de retard ou moins de trois cellules de retard, les moyens de retard comprenant au moins une cellule de retard.

Le gestionnaire de retard 10 est en outre configuré pour désactiver les moyens de comparaison 3 pendant une durée d'activation Tact d'au moins une cellule de retard CEL1, CEL2, CEL3 des premiers et deuxièmes moyens de retard 4, 5.

La durée d'activation Tact est proportionnelle du nombre de cellules activées. Si deux cellules sont activées, la durée Tact est égale à deux cycles d'horloge, si trois cellules sont activées la durée Tact est égale à trois cycles d'horloge.

La durée d'activation Tact permet de ne pas prendre en compte les résultats de comparaison générés par les moyens de comparaison 3 jusqu'à ce que les lignes L11 et L2 soient à nouveau synchronisées aux entrées des moyens de comparaison 3 de manière à ne pas prendre en compte des messages d'erreur provoquées par le changement de la valeur variable T_ret.

La figure 3 illustre un exemple de mise en oeuvre du système sur puce CI lors de l'augmentation de la valeur variable T_ret pour tous les modes de réalisation du système CI décrits.

On suppose qu'initialement la valeur variable T_ret est nulle.

Dans une première étape 100, la valeur variable T_ret est déterminée de manière aléatoire. Le générateur aléatoire 9 tire un nombre N1 non nul.

Puis dans une étape 101, le gestionnaire de retard 10 détermine si le nombre N1 tiré est supérieur ou inférieur au nombre N2 de cellules de retard CEL1, CEL2, CEL3.

Si la réponse est Oui (R1), le nombre tiré N1 est inférieur au nombre de cellules N2, le gestionnaire de retard 10 commande les premiers et deuxièmes moyens de retard 4, 5 en activant N1 cellules de retard pour retarder la transmission de la ligne L1 vers les moyens de comparaison 3 et la transmission de la ligne Linit vers l'unité de traitement 2 de N1 cycles d'horloge, et commande les moyens de comparaison 3 de sorte qu'ils soient inactifs pendant N1 cycles d'horloge correspondant à la durée d'activation Tact des moyens de retard 4 et 5 (étape 102).

Si la réponse est Non (R2) le nombre tiré N1 est supérieur au nombre de cellules N2, le gestionnaire de retard 10 commande les premiers et deuxièmes moyens de retard 4, 5 en activant N2 cellules de retard pour retarder la transmission de la ligne L1 vers les moyens de comparaison 3 et la transmission de la ligne Linit vers l'unité de traitement 2 de N2 cycles d'horloge, et commande les moyens de comparaison 3 de sorte qu'ils soient inactifs pendant N2 cycles d'horloge correspondant à la durée d'activation Tact des moyens de retard 4 et 5 (étape 103).

Dans le premier mode de réalisation illustré à la figure 1, le gestionnaire de retard 10 est en outre configuré pour simultanément transmettre à la première unité de traitement 1 une commande d'attente Satt lors de la désactivation d'au moins une cellule de retard CEL1, CEL2, CEL3 des premiers et deuxièmes moyens de retard 4, 5.

La commande d'attente Satt est configurée pour arrêter l'unité de traitement 1 pendant une durée de désactivation Tdes d'au moins une cellule de retard CEL1, CEL2, CEL3.

La durée de désactivation Tdes est proportionnelle au nombre de cellules désactivées. Si deux cellules sont désactivées, la durée Tdes est égale à deux cycles d'horloge, si trois cellules sont désactivées la durée Tdes est égale à trois cycles d'horloge.

La durée de désactivation Tdes permet de synchroniser la réception des lignes L11 et L2 aux entrées des moyens de comparaison 3 suite à la diminution de la valeur variable T_ret.

On se réfère à la figure 4 qui illustre un exemple de mise en oeuvre du circuit intégré CI lors de la diminution de la valeur variable T_ret dans le cas du premier mode de réalisation du système CI illustré à la figure 1.

On suppose que la valeur variable T_ret est non nulle et égale à N3 cycles d'horloge (N3 cellules de retard activées).

Dans une première étape 104, le générateur aléatoire 9 tire un nombre N4 non nul.

Puis dans une étape 105, le gestionnaire de retard 10 détermine si le nombre N4 tiré est supérieur ou inférieur au nombre N3 de cellules activées.

Si la réponse est Oui (R1), le nombre tiré N4 est inférieur au nombre de cellules N3 activées, le gestionnaire de retard 10 commande les premiers et deuxièmes moyens de retard 4, 5 en désactivant N3-N4 cellules de retard pour diminuer le retard de la transmission de la ligne L1 vers les moyens de comparaison 3 et de la transmission de la ligne Linit vers l'unité de traitement 2 de N3 à N4 cycles d'horloge, et transmet simultanément la commande d'attente Satt à la première unité de traitement 1 lors de la désactivation de la cellule de retard des premiers et deuxièmes moyens de retard 4 et 5 (étape 106).

Si la réponse est Oui (R2), le nombre tiré N4 est supérieur au nombre de cellules activées N3, le gestionnaire de retard 10 commande les premiers et deuxième de retard 4, 5 en désactivant N3 cellules de retard, et transmet simultanément la commande d'attente Satt à la première unité de traitement 1 lors de la désactivation de la/des cellule(s) de retard des premiers et deuxièmes moyens de retard 4 et 5 (étape 107).

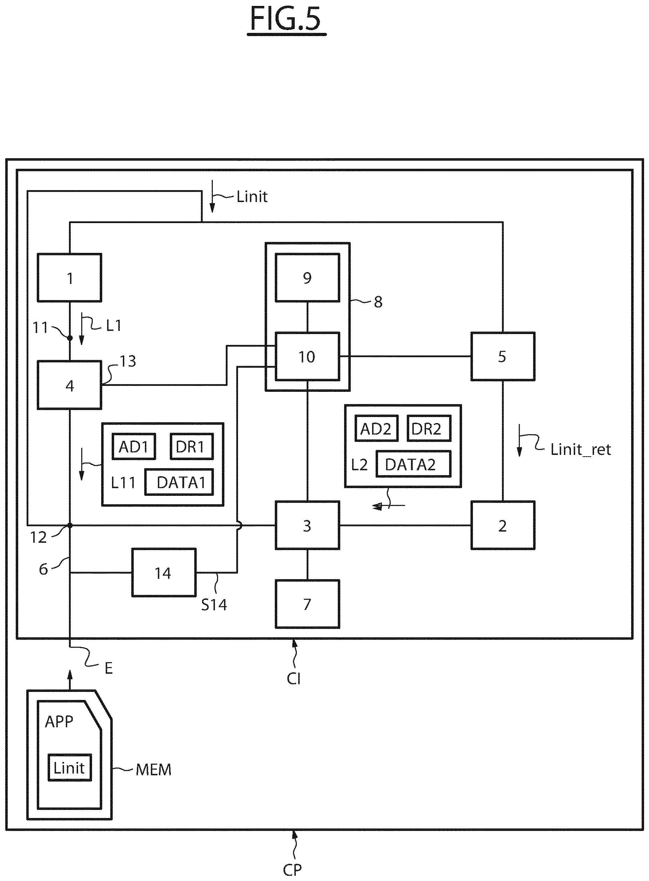

La figure 5 décrit un deuxième mode de réalisation du système sur puce CI.

Ce mode de réalisation diffère du premier mode de réalisation illustré à la figure 1 en ce qu'il comprend en outre un gestionnaire 14 du bus 6 relié au gestionnaire de retard 10, le gestionnaire de retard 10 n'étant pas relié à la première unité de traitement 1.

Le gestionnaire de retard 10 est en outre configuré pour désactiver au moins une cellule de retard CEL1, CEL2, CEL3 des premiers et deuxièmes moyens de retard 4, 5 entre l'émission d'une requête d'une ligne d'instructions par la première unité de traitement et la réception de ladite ligne par la première unité de traitement.

Le gestionnaire de bus 14 transmet au gestionnaire de retard 10 un signal S14 indicatif de l'état de traitement de la requête émis par l'unité de traitement 1.

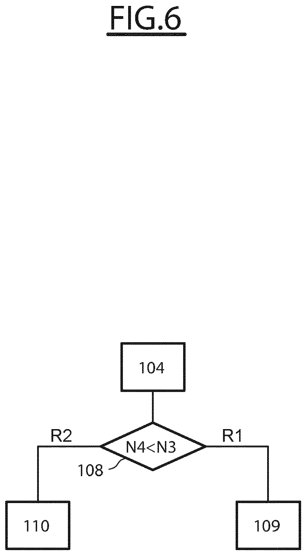

On se réfère à la figure 6 qui illustre un exemple de mise en oeuvre du système CI lors de la diminution de la valeur variable T_ret dans le cas du deuxième mode de réalisation du circuit CI illustré à la figure 5.

On suppose que la valeur variable T_ret est non nulle et égale à N3 cycles d'horloge (N3 cellules de retard activées).

On retrouve l'étape 104 décrite précédemment.

Dans la première étape 104, le générateur aléatoire 9 tire le nombre N4 non nul.

Puis dans l'étape 108, le gestionnaire de retard 10 détermine si le nombre N4 tiré est supérieur ou inférieur au nombre N3 de cellules activées.

Si la réponse est Oui (R1), le nombre tiré N4 est inférieur au nombre de cellules N3 activées, le gestionnaire de retard 10 commande les premiers et deuxièmes moyens de retard 4, 5 en désactivant N3-N4 cellules de retard pour diminuer le retard de la transmission de la ligne L1 vers les moyens de comparaison 3 et de la transmission de la ligne Linit vers l'unité de traitement 2 de N3 à N4 cycles d'horloge entre une prochaine émission d'une requête d'une ligne d'instructions par la première unité de traitement 1 et la réception de ladite ligne par la première unité de traitement 1 (étape 109).

Si la réponse est Non (R2), le nombre tiré N4 est supérieur au nombre de cellules activées N3, le gestionnaire de retard 10 commande les premiers et deuxième moyens de retard 4, 5 en désactivant Ndes1 cellules de retard entre la prochaine émission d'une requête d'une ligne d'instructions par la première unité de traitement 1 et la réception de ladite ligne par la première unité de traitement 1 (étape 110), la détection de l'émission d'une requête d'une ligne d'instructions et la réception de ladite ligne par la première unité de traitement 1 étant effectués par le gestionnaire 14, Ndes1 étant la valeur minimale choisie parmi N3 et le nombre de cycles d'horloge nécessaire pour traiter la requête par exemple par la mémoire MEM.

Le gestionnaire 14 transmet le signal S14 au gestionnaire de retard 10.

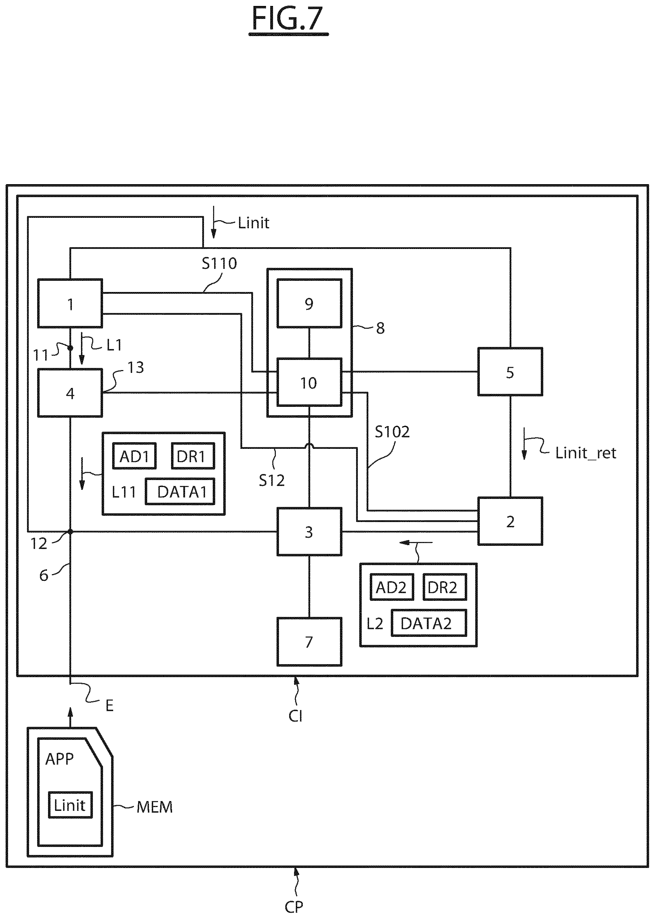

La figure 7 illustre un troisième mode de réalisation du système sur puce CI.

Ce mode de réalisation diffère du premier mode de réalisation illustré à la figure 1 en ce que le gestionnaire de retard 10 reçoit un signal S110 émis par l'unité de traitement 1 et indicatif de l'exécution d'une instruction de branchement par l'unité 1. En outre, le gestionnaire 10 est relié à la deuxième unité de traitement 2 pour transmettre un signal S102 de prise en compte par la deuxième unité de traitement 2 d'un signal S 12 émis par la première unité 1 et reçu sur une entrée de la deuxième unité de traitement.

Une instruction de branchement comprend toute instruction provoquant une purge du canal de transmission d'information (« pipeline ») de la première unité de traitement 1 ou un arrêt temporaire de la première unité de traitement 1.

Le gestionnaire de retard 10 est en outre configuré pour désactiver au moins une cellule de retard CEL1, CEL2, CEL 3 des premiers et deuxièmes moyens 4, 5 de retard entre l'exécution d'une ligne d'instructions contenant au moins une instruction de branchement et l'exécution de la ligne d'instructions désignée par l'instruction de branchement.

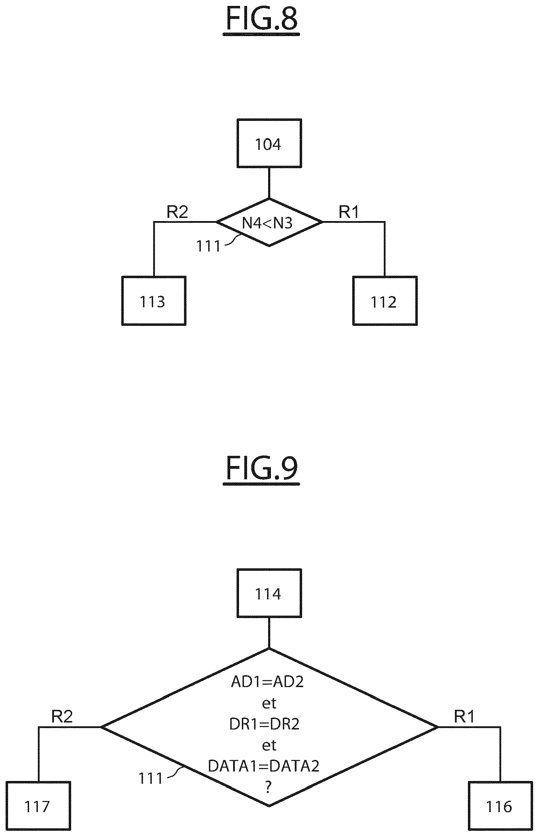

On se réfère à la figure 8 qui illustre un exemple de mise en oeuvre du système CI lors de la diminution de la valeur variable T_ret dans le cas du deuxième mode de réalisation du système CI illustré à la figure 5.

On suppose que la valeur variable T_ret est non nulle et égale à N3 cycles d'horloge (N3 cellules de retard activées).

On retrouve l'étape 104 décrite précédemment.

Dans la première étape 104, le générateur aléatoire 9 tire le nombre N4 non nul aléatoirement.

Puis dans l'étape 111, le gestionnaire de retard 10 détermine si le nombre N4 tiré est supérieur ou inférieur au nombre N3 de cellules activées.

Si la réponse est Oui (R1), le nombre tiré N4 est inférieur au nombre de cellules N3 activées, le gestionnaire de retard 10 commande les premiers et deuxièmes moyens de retard 4, 5 en désactivant N3-N4 cellules de retard pour diminuer le retard de transmission de la ligne L1 vers les moyens de comparaison 3 et de la ligne Linit vers l'unité de traitement 2 de N3 à N4 cycles d'horloge entre une prochaine exécution d'une ligne d'instructions contenant au moins une instruction de branchement et l'exécution de la ligne d'instructions désignée par l'instruction de branchement, la cellule de retard étant configurée pour retarder la transmission d'un signal les traversant.

Le gestionnaire de retard 10 désactive, à la réception du signal S110 émis par la première unité de traitement 1, N3 cellules de retard des premiers et deuxième de retard 4, 5, et émet le signal S 12 de sorte que l'unité de traitement 2 exécute l'instruction de la ligne d'instructions désignée par l'instruction de branchement de manière à synchroniser les sorties des unités de traitement 1 et 2 (étape 112).

Si la réponse est Non (R2), le nombre tiré N4 est supérieur au nombre de cellules activées N3, le gestionnaire de retard 10 commande les premiers et deuxième de retard 4, 5 en désactivant Ndes2 cellules entre une prochaine exécution d'une ligne d'instructions contenant au moins une instruction de branchement et l'exécution de la ligne d'instructions désignée par l'instruction de branchement, la cellule de retard étant configurée pour retarder la transmission d'un signal les traversant tel que décrit ci-avant, Ndes2 étant la valeur minimale choisie parmi N3 et le nombre de cycles d'horloge nécessaire pour purger le canal de transmission d'information (« pipeline ») de la première unité de traitement 1.

La figure 9 illustre un exemple de mis en oeuvre des moyens de comparaison 3.

Les moyens de comparaison 3 reçoivent en entrée les première et deuxième lignes de données traitées retardées L11 et L2 (étape 114).

Les moyens de comparaison effectuent une première comparaison des première et deuxième adresses AD1 et AD2, une deuxième comparaison des premier et deuxième jeux de droits DR1 et DR2, et une troisième comparaison des premier et deuxième ensembles de données DATA1 et DATA2 (étape 115).

Si la réponse est Oui (R1), les première et deuxième adresses AD1 et AD2, les premier et deuxième jeux de droits DR1 et DR2, et les premier et deuxième ensembles de données DATA1 et DATA2 sont identiques, les moyens de comparaison 3 n'émettent aucun signal (étape 116).

Si la réponse est Non (R2), les première et deuxième adresses AD1 et AD2, ou les premier et deuxième jeux de droits DR1 et DR2, ou les premier et deuxième ensembles de données DATA1 et DATA2 ne sont pas identiques, les moyens de comparaison 3 émettent le signal S3 de non authentification (étape 117).

Dans le premier mode de réalisation du circuit intégré CI illustré à la figure 1, la valeur variable T_ret est modifiée lorsque le gestionnaire 10 envoie le signal Satt permettant de contrôler l'instant de changement de la valeur variable T_ret, contrairement aux deuxième et troisième modes de réalisation illustrés aux figures 6 et 7 dépendant d'évènement résultant de l'exécution de lignes de données par l'unité de traitement 1.

Dans le premier mode de réalisation, l'unité de traitement 1 est mis en pause pendant la modification de la valeur variable T_ret entraînant un ralentissement de l'exécution du programme applicatif APP contrairement aux deuxième et troisième modes de réalisation mettant en oeuvre la modification de la valeur variable T_ret pendant des périodes de latence de l'unité de traitement 1.

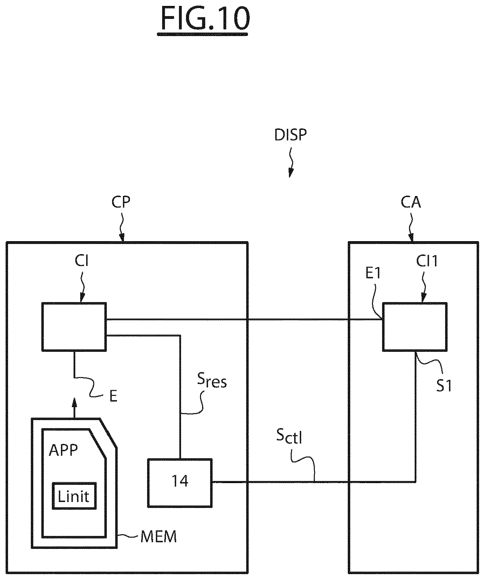

La figure 10 illustre un exemple d'un dispositif d'authentification d'un accessoire comprenant l'appareil CP et un accessoire électronique CA coopérant avec l'appareil CP.

Le dispositif d'authentification permet d'identifier si l'accessoire CA relié au à l'appareil CP.

L'appareil CP est par exemple un smartphone (« téléphone intelligent ») et l'accessoire CA est par exemple un chargeur de smartphone.

Le dispositif d'authentification permet d'identifier par exemple si le smartphone et le chargeur sont de la même marque.

L'accessoire CA comporte un système sur puce CI1 identique au circuit sur puce CI.

L'appareil CP est en outre configuré pour délivrer la ligne de données initiale Linit à l'accessoire CA, et l'accessoire CA est configuré pour délivrer à l'appareil CP un signal de contrôle Sctl indicatif du résultat de la comparaison effectuée par l'accessoire CA.

L'appareil CP est configuré pour comparer le signal de contrôle Sctl à un signal de résultat Sres indicatif du résultat de la comparaison effectuée par l'appareil CP.

L'appareil CP comprend en outre un module de comparaison 14 configuré pour comparer les signaux Sctl et Sres.

Le système CI est en outre configuré pour délivrer la ligne initiale Linit sur l'entrée E1 du système CI1, et pour délivrer le signal Sctl sur une première entrée du module de comparaison 14.

Le système CI1 est en outre configuré pour délivrer le signal Sctl sur une deuxième entrée du module de comparaison 14.

Si les signaux Sctl et Sres sont identiques, l'accessoire CA est authentifié par l'appareil CP.

Si les signaux Sctl et Sres sont différents, l'accessoire CA n'est pas authentifié par l'appareil CP. Dans ce cas, l'une au moins des unités de traitement de l'accessoire CA ou de l'appareil CP fait l'objet d'une attaque par injection de fautes.

## Revendications

1. Procédé d'authentification d'un système sur puce (CI, CI1) comprenant :
- une réception d'une ligne de données initiale (Linit),
- un premier traitement de la ligne de données initiale par une première unité de traitement (1) de façon à délivrer une première ligne de données traitée (L1),
- une application d'un premier retard à la première ligne de données traitée pour délivrer une première ligne de données traitée retardée (L11),
- une application d'un deuxième retard à la ligne de données initiale pour délivrer une ligne de de données initiale retardée (Linit_ret),
- un deuxième traitement de la ligne de données initiale retardée par une deuxième unité de traitement (2) pour délivrer une deuxième ligne de données traitée retardée (L2),
- une comparaison des contenus des première et deuxième lignes de données traitées retardées, et
- une délivrance d'un signal (S3) de non authentification si lesdits contenus ne sont pas identiques,
ledit procédé étant **caractérisé en ce que** les premier et deuxième retards sont
égaux à une valeur variable (T_ret), la valeur variable (T_ret) étant déterminée de manière aléatoire.

2. Procédé selon la revendication 1, les première (L11) et deuxième (L2) lignes de données traitées retardées comprennent respectivement une première adresse (AD1) et une deuxième adresse (AD2), un premier jeu de droits (DR1) et un deuxième jeu de droits (DR2) et un premier ensemble de données (DATA1) et un deuxième ensemble de données (DATA2), le procédé comprenant :
- une première comparaison des première et deuxième adresses,
- une deuxième comparaison des premier et deuxième jeux de droits, et
- une troisième comparaison des premier et deuxième ensembles de données.

3. Procédé selon la revendication 2, comprenant la délivrance du signal (S3) de non authentification lorsque au moins une des comparaisons des première et deuxième adresses (AD1, AD2), des premier et deuxième jeux de droits (DR1, DR2) ou des premier et deuxième ensembles de données (DATA1, DATA2) ne sont pas identiques.

4. Procédé selon l'une des revendications 1 à 3, comprenant une augmentation de la valeur variable (T_ret) des premier et deuxième retards en activant au moins une cellule de retard (CEL1, CEL2, CEL3) configurée pour retarder la transmission d'un signal la traversant, la comparaison des contenus des première et deuxième lignes traitées retardées étant inactive pendant la durée d'activation de ladite au moins une cellule de retard.

5. Procédé selon l'une des revendications 1 à 4, comprenant une diminution de la valeur variable (T_ret) des premier et deuxième retards en désactivant au moins une cellule de retard (CEL1, CEL2, CEL3) configurée pour retarder la transmission d'un signal la traversant lorsque la première unité de traitement (1) reçoit une commande d'attente (Satt).

6. Procédé selon l'une des revendications 1 à 4, comprenant une diminution de la valeur variable (T_ret) des premier et deuxième retards en désactivant au moins une cellule de retard (CEL1, CEL2, CEL3) entre l'émission d'une requête d'une ligne d'instructions par la première unité de traitement (1) et la réception de ladite ligne par la première unité de traitement, la cellule de retard étant configurée pour retarder la transmission d'un signal les traversant.

7. Procédé selon l'une des revendications 1 à 4, comprenant une diminution de la valeur variable (T_ret) des premier et deuxième retards en désactivant au moins une cellule de retard (CEL1, CEL2, CEL3) entre l'exécution d'une ligne d'instructions contenant au moins une instruction de branchement et l'exécution de la ligne d'instructions désignée par l'instruction de branchement, la cellule de retard étant configurée pour retarder la transmission d'un signal les traversant.

8. Système sur puce (CI, CI1) comprenant :
- une entrée (E, E1) pour recevoir une ligne de données initiale (Linit),
- une première unité de traitement (1) couplée à l'entrée et configurée pour traiter la ligne de données initiale et délivrer une première ligne de données traitée (L1),
- des premiers moyens de retard (4) couplés à la sortie de la première unité de traitement et configurés pour délivrer une première ligne de données traitée retardée (L11) d'un premier retard,
- des deuxième moyens de retard (5) couplées à l'entrée et configurés pour délivrer la ligne de données initiale retardée (Linit_ret) d'un deuxième retard,
- une deuxième unité de traitement (2) couplée à la sortie des deuxièmes moyens de retard et configurée pour traiter la ligne de données initiale retardée et délivrer une deuxième ligne de données traitée retardée (L2), et
- des moyens de comparaison (3) configurés pour comparer les contenus des première et deuxième lignes de données traitées retardées et délivrer un signal (S3) de non authentification si lesdits contenus ne sont pas identiques,
ledit système étant **caractérisé en ce que** les premier et deuxième retards sont égaux à une valeur variable (T_ret) déterminée de manière aléatoire.

9. Système selon la revendication 8, les première (L11) et deuxième lignes (L2) de données traitées retardées comprennent respectivement une première adresse (AD1) et une deuxième adresse (AD2), un premier jeu de droits (DR1) et un deuxième jeu de droits (DR2) et un premier ensemble de données (DATA1) et un deuxième ensemble de données (DATA2), les moyens de comparaison (3) étant configurés pour comparer entre-eux les première et deuxième adresses, les premier et un deuxième jeux de droits et les premier et deuxième ensembles de données.

10. Système selon la revendication 9, dans lequel les moyens de comparaison (3) sont configurés pour émettre le signal (S3) de non authentification lorsque au moins l'une des comparaisons des première et deuxième adresses (AD1, AD2), des premier et deuxième jeux de droits (DR1, DR2) ou des premier et deuxième ensembles de données (DATA1, DATA2) ne sont pas identiques.

11. Système selon l'une des revendications 8 à 10, dans lequel les premiers (47) et deuxièmes (5) moyens de retard comprennent chacun au moins une cellule de retard (CEL1, CEL2, CEL3) configurée pour retarder la transmission d'un signal la traversant, le système comprenant en outre des moyens de commande (8) configurés pour activer ou désactiver ladite au moins une cellule de retard des premiers et deuxièmes moyens de retard de manière à respectivement augmenter ou diminuer la valeur variable.

12. Système selon la revendication 11, les moyens de commande (8) étant en outre configurés pour désactiver les moyens de comparaison (3) pendant la durée d'activation de ladite au moins une cellule de retard (CEL1, CEL2, CEL3) des premiers (4) et deuxièmes (5) moyens de retard.

13. Système selon l'une des revendications 11 et 12, les moyens de commande (8) étant en outre configurés pour simultanément transmettre à la première unité de traitement (1) une commande d'attente (Satt) lors de la désactivation de ladite au moins une cellule de retard (CEL1, CEL2, CEL3) des premiers (4) et deuxièmes (5) moyens de retard.

14. Système selon l'une des revendications 11 et 12, les moyens de commande (8) étant en outre configurés pour désactiver ladite au moins une cellule de retard (CEL1, CEL2, CEL3) des premiers (4) et deuxièmes (5) moyens de retard entre l'émission d'une requête d'une ligne d'instructions par la première unité de traitement et la réception de ladite ligne par la première unité de traitement.

15. Système selon l'une des revendications 11 et 12, les moyens de commande (8) étant en outre configurés pour désactiver ladite au moins une cellule de retard (CEL1, CEL2, CEL3) des premiers (4) et deuxièmes (5) moyens de retard entre l'exécution d'une ligne d'instructions contenant au moins une instruction de branchement et l'exécution de la ligne d'instructions désignée par l'instruction de branchement.

16. Système selon l'une des revendications 11 à 15, dans lequel les moyens de commande (8) comprennent un générateur de nombre aléatoire (9) relié à un gestionnaire de retard (10) configuré pour piloter les premiers (4) et deuxièmes (5) moyens de retard en fonction du générateur de nombre aléatoire.

17. Appareil (CP) comprenant un système sur puce selon l'une quelconque des revendications 8 à 16.

18. Dispositif d'authentification (DISP) d'un accessoire électronique (CA) comprenant un appareil (CP) selon la revendication 17 et un accessoire électronique (CA) coopérant avec l'appareil et comportant un système sur puce selon l'une quelconque des revendications 8 à 16, l'appareil étant configuré pour délivrer la ligne de données initiale (Linit) à l'accessoire, et l'accessoire étant configuré pour délivrer à l'appareil un signal de contrôle (Sctl) indicatif du résultat de la comparaison effectuée par l'accessoire, l'appareil étant configuré pour comparer le signal contrôle à un signal de résultat (Sres) indicatif du résultat de la comparaison effectuée par l'appareil.

## Patentansprüche

1. Verfahren zur Authentifizierung eines Ein-Chip-Systems (CI, CI1), umfassend:
- einen Empfang einer initialer Datenzeile (Linit),
- eine erste Verarbeitung der initialen Datenzeile durch eine erste Verarbeitungseinheit (1), damit eine erste verarbeitete Datenzeile (L1) geliefert wird,
- eine Anwendung einer ersten Verzögerung auf die erste verarbeitete Datenzeile, um eine erste verzögerte verarbeitete Datenzeile (L11) zu liefern,
- eine Anwendung einer zweiten Verzögerung auf die initiale Datenzeile, um eine verzögerte initiale Datenzeile (Linit_ret) zu liefern,
- eine zweite Verarbeitung der verzögerten initialen Datenzeile durch eine zweite Verarbeitungseinheit (2), um eine zweite verzögerte verarbeitete Datenzeile (L2) zu liefern,
- einen Vergleich der Inhalte der ersten und der zweiten verzögerten verarbeiteten Datenzeile, und
- eine Lieferung eines Nicht-Authentifizierungssignals (S3), wenn diese Inhalte nicht identisch sind,
wobei das Verfahren **dadurch gekennzeichnet ist, dass** die erste und die zweite Verzögerung gleich einem variablen Wert (T_ret) sind, wobei der variable Wert (T_ret) zufällig bestimmt wird.

2. Verfahren nach Anspruch 1, wobei die erste (L11) und die zweite (L2) verzögerte verarbeitete Datenzeile jeweils eine erste Adresse (AD1) und eine zweite Adresse (AD2), einen ersten Berechtigungssatz (DR1) und einen zweiten Berechtigungssatz (DR2) und eine erste Gesamtheit von Daten (DATA1) und eine zweite Gesamtheit von Daten (DATA2) umfassen, wobei das Verfahren umfasst:
- einen ersten Vergleich der ersten und zweiten Adresse,
- einen zweiten Vergleich des ersten und zweiten Berechtigungssatzes, und
- einen dritten Vergleich der ersten und zweiten Gesamtheit von Daten.

3. Verfahren nach Anspruch 2, die Lieferung des Nicht-Authentifizierungssignals (S3) umfassend, wenn mindestens einer der Vergleiche der ersten und zweiten Adresse (AD1, AD2), des ersten und zweiten Berechtigungssatzes (DR1, DR2) oder der ersten und zweiten Gesamtheit von Daten (DATA1, DATA2) nicht identisch ist.

4. Verfahren nach einem der Ansprüche 1 bis 3, eine Erhöhung des variablen Wertes (T_ret) der ersten und zweiten Verzögerung durch Aktivierung mindestens einer Verzögerungszelle (CEL1, CEL2, CEL3) umfassend, die konfiguriert ist, um die Übertragung eines Signals zu verzögern, das durch sie hindurchgeht, wobei der Vergleich der Inhalte der ersten und zweiten verzögerten verarbeiteten Zeile während der Aktivierungszeit der mindestens einen Verzögerungszelle inaktiv ist.

5. Verfahren nach einem der Ansprüche 1 bis 4, eine Verringerung des variablen Wertes (T_ret) der ersten und zweiten Verzögerung durch Deaktivierung mindestens einer Verzögerungszelle (CEL1, CEL2, CEL3) umfassend, die konfiguriert ist, um die Übertragung eines Signals zu verzögern, das durch sie hindurchgeht, wenn die erste Verarbeitungseinheit (1) einen Wartebefehl (Satt) empfängt.

6. Verfahren nach einem der Ansprüche 1 bis 4, eine Verringerung des variablen Wertes (T_ret) der ersten und zweiten Verzögerung durch Deaktivierung mindestens einer Verzögerungszelle (CEL1, CEL2, CEL3) umfassend zwischen der Emission einer Anforderung einer Anweisungszeile durch die erste Verarbeitungseinheit (1) und dem Empfangen der Zeile durch die erste Verarbeitungseinheit, wobei die Verzögerungszelle konfiguriert ist, um die Übertragung eines Signals, das durch sie hindurchgeht, zu verzögern.

7. Verfahren nach einem der Ansprüche 1 bis 4, eine Verringerung des variablen Wertes (T_ret) der ersten und zweiten Verzögerung durch Deaktivieren mindestens einer Verzögerungszelle (CEL1, CEL2, CEL3) umfassend zwischen der Ausführung einer Anweisungszeile, die mindestens eine Verzweigungsanweisung enthält, und der Ausführung der Anweisungszeile, die von der Verzweigungsanweisung bezeichnet wird, wobei die Verzögerungszelle konfiguriert ist, um die Übertragung eines Signals, das durch sie hindurchgeht, zu verzögern.

8. Ein-Chip-System (CI, CI1), umfassend:
- einen Eingang (E, E1), um eine initiale Datenzeile (Linit) zu empfangen,
- eine erste Verarbeitungseinheit (1), die mit dem Eingang gekoppelt ist und konfiguriert, um die initiale Datenzeile zu verarbeiten und eine erste verarbeitete Datenzeile (L1) zu liefern,
- erste Verzögerungsmittel (4), die mit dem Ausgang der ersten Verarbeitungseinheit gekoppelt sind, und konfiguriert, um eine erste verzögerte verarbeitete Datenzeile (L11) einer ersten Verzögerung zu liefern,
- zweite Verzögerungsmittel (5), die mit dem Eingang gekoppelt sind, und konfiguriert, um die verzögerte initiale Datenzeile (Linit_ret) einer zweiten Verzögerung zu liefern,
- eine zweite Verarbeitungseinheit (2), die mit dem Ausgang der zweiten Verzögerungsmittel gekoppelt ist, und konfiguriert, um die verzögerte initiale Datenzeile zu verarbeiten und eine zweite verzögerte verarbeitete Datenzeile (L2) zu liefern, und
- Vergleichsmittel (3), konfiguriert, um die Inhalte der ersten und zweiten verzögerten verarbeiteten Datenzeile zu vergleichen, und ein Nicht-Authentifizierungssignal (S3) zu liefern, wenn die Inhalte nicht identisch sind,
wobei das System **dadurch gekennzeichnet ist, dass** die erste und zweite Verzögerung gleich einem variablen Wert (T_ret) sind, der zufällig bestimmt wird.

9. System nach Anspruch 8, wobei die erste (L11) und die zweite verzögerte verarbeitete Datenzeile (L2) jeweils eine erste Adresse (AD1) und eine zweite Adresse (AD2), einen ersten Berechtigungssatz (DR1) und einen zweiten Berechtigungssatz (DR2) und eine erste Gesamtheit von Daten (DATA1) und eine zweite Gesamtheit von Daten (DATA2) umfassen, wobei die Vergleichsmittel (3) konfiguriert sind, um die erste und die zweite Adresse, den ersten und einen zweiten Berechtigungssatz und die erste und zweite Gesamtheit von Daten miteinander zu vergleichen.

10. System nach Anspruch 9, wobei die Vergleichsmittel (3) konfiguriert sind, um das Nicht-Authentifizierungssignal (S3) zu emittieren, wenn mindestens der eine der Vergleiche der ersten und zweiten Adresse (AD1, AD2), des ersten und zweiten Berechtigungssatzes (DR1, DR2) oder der ersten und zweiten Gesamtheit von Daten (DATA1, DATA2) nicht identisch ist.

11. System nach einem der Ansprüche 8 bis 10, wobei die ersten (47) und zweiten (5) Verzögerungsmittel jeweils mindestens eine Verzögerungszelle (CEL1, CEL2, CEL3) umfassen, die konfiguriert ist, um die Übertragung eines Signals, das durch sie hindurchgeht, zu verzögern, wobei das System ferner Befehlsmittel (8) umfasst, die konfiguriert sind, um die mindestens eine Verzögerungszelle der ersten und zweiten Verzögerungsmittel zu aktivieren oder zu deaktivieren, um den variablen Wert zu erhöhen beziehungsweise zu verringern.

12. System nach Anspruch 11, wobei die Befehlsmittel (8) ferner konfiguriert sind, um die Vergleichsmittel (3) während der Aktivierungszeit der mindestens einen Verzögerungszelle (CEL1 CEL2, CEL3) der ersten (4) und zweiten (5) Verzögerungsmittel zu deaktivieren.

13. System nach einem der Ansprüche 11 und 12, wobei die Befehlsmittel (8) ferner konfiguriert sind, um gleichzeitig an die erste Verarbeitungseinheit (1) einen Wartebefehl (Satt) zu senden während der Deaktivierung der mindestens einen Verzögerungszelle (CEL1, CEL2, CEL3) der ersten (4) und zweiten (5) Verzögerungsmittel.

14. System nach einem der Ansprüche 11 und 12, wobei die Befehlsmittel (8) ferner konfiguriert sind, um mindestens die eine Verzögerungszelle (CEL1, CEL2, CEL3) der ersten (4) und zweiten (5) Verzögerungsmittel zu deaktivieren zwischen der Emission einer Anforderung einer Anweisungszeile durch die erste Verarbeitungseinheit und dem Empfangen der Zeile durch die erste Verarbeitungseinheit.

15. System nach einem der Ansprüche 11 und 12, wobei die Befehlsmittel (8) ferner konfiguriert sind, um mindestens die eine Verzögerungszelle (CEL1, CEL2, CEL3) der ersten (4) und zweiten (5) Verzögerungsmittel zu deaktivieren zwischen der Ausführung einer Anweisungszeile, die mindestens eine Verzweigungsanweisung enthält, und der Ausführung der Anweisungszeile, die durch die Verzweigungsanweisung bezeichnet wird.

16. System nach einem der Ansprüche 11 bis 15, wobei die Befehlsmittel (8) einen Zufallszahlengenerator (9) umfassen, der mit einem Verzögerungsmanager (10) verbunden ist, der konfiguriert ist, um die ersten (4) und zweiten (5) Verzögerungsmittel in Abhängigkeit vom Zufallszahlengenerator zu steuern.

17. Gerät (CP), ein Ein-Chip-System nach einem der Ansprüche 8 bis 16 umfassend.

18. Authentifizierungsvorrichtung (DISP) eines elektronischen Zubehörteils (CA), ein Gerät (CP) nach Anspruch 17 umfassend und ein elektronisches Zubehörteil (CA), das mit dem Gerät zusammenarbeitet und ein Ein-Chip-System nach einem der Ansprüche 8 bis 16 beinhaltet, wobei das Gerät konfiguriert ist, um die initiale Datenzeile (Linit) an das Zubehörteil zu liefern, und das Zubehörteil konfiguriert ist, um dem Gerät ein Steuersignal (Sctl) zu liefern, das das Ergebnis des Vergleichs anzeigt, der durch das Zubehörteil ausgeführt wurde, wobei das Gerät konfiguriert ist, um das Steuersignal mit einem Ergebnissignal (Sres) zu vergleichen, das das Ergebnis des Vergleichs anzeigt, der durch das Gerät ausgeführt wurde.

## Claims

1. A method for authenticating a system-on-chip (CI, CII), comprising:
- receiving an initial data line (Linit),
- a first processing of the initial data line by using a first processing unit (1) so as to deliver a first processed data line (L1),
- applying a first delay to the first processed data line to deliver a delayed first processed data line (L11),
- applying a second delay to the initial data line to deliver a delayed initial data line (Linit_ret),
- a second processing of the delayed initial data line by a second processing unit (2) to deliver a delayed second processed data line (L2),
- comparing contents of the delayed first and second processed data lines, and
- delivering a non-authentication signal (S3) if said contents are not identical,
said method being **characterised in that** the first and second delays are equal to a variable value (T_ret), the variable value (T_ret) being determined randomly.

2. The method according to claim 1, the delayed first (L11) and second (L2) processed data lines respectively comprise a first address (AD1) and a second address (AD2), a first permission set (DR1) and a second permission set (DR2), and a first data set (DATA1) and a second data set (DATA2), the method comprising:
- a first comparison of the first and second addresses,
- a second comparison of the first and second permission sets, and
- a third comparison of the first and second data sets.

3. The method according to claim 2, comprising the delivery of the non-authentication signal (S3) when at least one amongst the first and second addresses (AD1, AD2), the first and second permission sets (DR1, DR2), or the first and second data sets (DATA1, DATA2), respectively, are not identical.

4. The method according to one of claims 1 to 3, comprising an increase of the variable value (T_ret) of the first and second delays by activating at least one delay cell (CEL1 CEL2, CEL3) configured to delay the transmission of a signal crossing it, the comparison of the contents of the delayed first and second processed lines being inactive for the duration of activation of said at least one delay cell.

5. The method according to one of claims 1 to 4, comprising a decrease of the variable value (T_ret) of the first and second delays by deactivating at least one delay cell (CEL1, CEL2, CEL3) configured to delay the transmission of a signal crossing it when the first processing unit (1) receives a wait command (Satt).

6. The method according to one of claims 1 to 4, comprising a decrease of the variable value (T_ret) of the first and second delays by deactivating at least one delay cell (CEL1, CEL2, CEL3) between the emission of a request for an instruction line by the first processing unit (1) and the reception of said line by the first processing unit, the delay cell being configured to delay the transmission of a signal crossing them.

7. The method according to one of claims 1 to 4, comprising a decrease of the variable value (T_ret) of the first and second delays by deactivating at least one delay cell (CEL1, CEL2, CEL3) between the execution of an instruction line containing at least one branch instruction and the execution of the instruction line indicated by the branch instruction, the delay cell being configured to delay the transmission of a signal crossing them.

8. A system-on-chip (CI, CII) comprising:
- an input (E, E1) for receiving an initial data line (Linit),
- a first processing unit (1) coupled to the input and configured to process the initial data line and deliver a first processed data line (L1),
- first delay means (4) coupled to the output of the first processing unit and configured to deliver a first processed data line (L11) delayed by a first delay,
- second delay means (5) coupled to the input and configured to deliver the initial data line (Linit_ret) delayed by a second delay,
- a second processing unit (2) coupled to the output of the second delay means and configured to process the delayed initial data line and deliver a delayed second processed data line (L2), and
- comparison means (3) configured to compare the contents of the delayed first and second processed data lines and deliver a non-authentication signal (S3) if said contents are not identical,
said system being **characterised in that** the first and second delays are equal to a variable value (T_ret) determined randomly.

9. The system according to claim 8, the delayed first (L11) and second (L2) processed data lines comprise a first address (AD1) and a second address (AD2), a first permission set (DR1) and a second permission set (DR2), and a first data set (DATA1) and a second data set (DATA2), respectively, the comparison means (3) being configured to compare the first and second addresses, the first and second permission sets and the first and second data sets.

10. The system according to claim 9, wherein the comparison means (3) are configured to emit the non-authentication signal (S3) when at least one of the comparisons of the first and second addresses (AD1, AD2), the first and second permission sets (DR1, DR2) or the first and second data sets (DATA1, DATA2) are not identical.

11. The system according to one of claims 8 to 10, wherein each of the first (47) and second (5) delay means comprises at least one delay cell (CEL1, CEL2, CEL3) configured to delay the transmission of a signal crossing it, the system further comprising control means (8) configured to activate or deactivate said at least one delay cell of the first and second delay means so as to increase or decrease the variable value, respectively.

12. The system according to claim 11, the control means (8) being further configured to deactivate the comparison means (3) for the duration of activation of said at least one delay cell (CEL1, CEL2, CEL3) of the first (4) and second (5) delay means.

13. The system according to one of claims 11 and 12, the control means (8) being further configured to simultaneously transmit a wait command (Satt) to the first processing unit (1) upon deactivation of said at least one delay cell (CEL1, CEL2, CEL3) of the first (4) and second (5) delay means.

14. The system according to one of claims 11 and 12, the control means (8) being further configured to deactivate said at least one delay cell (CEL1, CEL2, CEL3) of the first (4) and second (5) delay means between the emission of a request for an instruction line by the first processing unit and the reception of said line by the first processing unit.

15. The system according to one of claims 11 and 12, the control means (8) being further configured to deactivate said at least one delay cell (CEL1, CEL2, CEL3) of the first (4) and second (5) delay means between the execution of an instruction line containing at least one branch instruction and the execution of the instruction line indicated by the branch instruction.

16. The system according to one of claims 11 to 15, wherein the control means (8) comprise a random number generator (9) connected to a delay handler (10) configured to control the first (4) and second (5) delay means according to the random number generator.

17. An apparatus (CP) comprising a system-on-chip according to any one of claims 8 to 16.

18. A device (DISP) for authenticating an electronic apparatus (CA) comprising an apparatus (CP) according to claim 17 and an electronic accessory (CA) cooperating with the apparatus and including a system-on-chip according to any one of claims 8 to 16, the apparatus being configured to deliver the initial data line (Linit) to the accessory, and the accessory being configured to deliver to the apparatus a control signal (Sctl) indicative of the result of the comparison performed by the accessory, the apparatus being configured to compare the control signal with a result signal (Sres) indicative of the result of the comparison performed by the apparatus.
